# EUROPÄISCHE PATENTSCHRIFT

(11) **EP 0 781 212 B1**
(45) Veröffentlichungstag und Bekanntmachung des Hinweises auf die Patenterteilung: **10.03.1999**
(21) Anmeldenummer: 95931143.2
(22) Anmeldetag: 08.09.1995
(51) Int. Cl.: B60J 1/17, E05F 11/38

(54) **VORRICHTUNG ZUM VERBINDEN EINER FENSTERSCHEIBE MIT EINEM FENSTERHEBER**
DEVICE FOR LINKING A WINDOW PANE TO A WINDOW LIFTER
DISPOSITIF POUR RELIER UNE VITRE A UN LEVE-VITRE

(30) Priorität: 16.09.1994 DE 4433052
(43) Veröffentlichungstag der Anmeldung: 02.07.1997
(73) Patentinhaber: Brose Fahrzeugteile GmbH & Co. KG, 96450 Coburg (DE)
(72) Erfinder: LIEB, Hans-Dieter, D-96450 Coburg (DE); EDWARDS, Barry, D-96049 Bamberg (DE)
(74) Vertreter: Müller, Wolfram Hubertus, Dipl.-Phys.
(86) Internationale Anmeldenummer: DE9501273
(87) Internationale Veröffentlichungsnummer: WO9608386

(56) Entgegenhaltungen:
- EP-A- 0 173 091
- EP-A- 0 208 237
- EP-A- 0 294 254
- EP-A- 0 362 027
- DE-A- 2 458 314
- DE-A- 3 108 244
- DE-A- 3 817 260
- DE-A- 4 102 941
- DE-A- 4 218 425
- FR-A- 2 648 504
- US-A- 4 866 895
- PATENT ABSTRACTS OF JAPAN vol. 18 no. 438 (M-1656) ,16.August 1994 & JP,A,06 135228 (HONDA MOTOR CO.) 17.Mai 1994, in der Anmeldung erwähnt

## Beschreibung

Die Erfindung betrifft eine Vorrichtung zum Verbinden einer Fensterscheibe mit einem Fensterheber, insbesondere für Kraftfahrzeuge, gemäß dem Oberbegriff des Patentanspruchs 1 und zeichnet sich durch einen einfachen Aufbau bei Verwendung nur weniger Einzelteile aus. Außerdem gewährleistet die Erfindung einen einfachen Montageablauf, verbunden mit einer selbsttätigen Justage zwischen Fensterscheibe und Fensterheber.

Es sind verschiedene Arten von Vorrichtungen zum Verbinden einer Fensterscheibe mit einem Fensterheber bekannt. Man unterscheidet grundsätzlich formschlüssige, z. B. schnappbare Verbindungen, kraftschlüssige Klemmverbindungen und Klebeverbindungen.

Aus EP 0 208 237 B1 ist ein Traglement zur Verbindung der Fensterscheibe mit einer entsprechenden Führungsvorrichtung bekannt, die mehrere, beiderseits der Unterkante der Fensterscheibe angeordnete Stützflügel aufweist. Einer der Stützflügel trägt einen Stift, dem ein Loch in der Fensterscheibe zugeordnet ist. Beim Einführen der Fensterscheibe zwischen die elastischen Stützflügel biegen sich diese nach außen, bis der Stift in das Scheibenloch eingerastet ist.

Im Montageprozeß ist die zu erzielende Übereinstimmung zwischen dem Scheibenloch und dem darin einzurastenden Stift schwierig zu erreichen. Um ein sicheres Einrasten zu gewährleisten, muß wegen zwangsläufig auftretender Fertigungstoleranzen ein gewisses Übermaß des Abstandes des Stiftes von der Basisfläche, an der die Scheibenunterkante anschlägt, vorgesehen werden. Dadurch wird aber ein Spiel geschaffen, das insbesondere bei Umkehr der Bewegungsrichtung der Fensterscheibe zu Geräuschen führen kann. Darüber hinaus erfordert die Herstellung des beschriebenen Trägers wegen seines komplexen Aufbaus ein relativ aufwendiges Werkzeug.

Eine weitere schnappbare Kupplungsvorrichtung zwischen Scheibe und Scheibenheber zeigt die DE 31 08 244 A1. Sie besteht aus zwei miteinander verbundenen kanalartigen Profilen, von denen das eine einen Bereich der Scheibenunterkante umschließt und dort befestigt ist. Das andere nach unten offene Profil trägt an seinen Enden nach innen gerichtete Haken, die mit Vorsprüngen von Winkelelementen der Hebevorrichtung in Eingriff treten können, wodurch eine formschlüssige Verbindung erreichbar ist. Gemäß dem Vorschlag soll das Einschnappen der Verbindungselemente durch das Verfahren der Fensterscheibe gegen die obere Anschlagsposition erzwungen werden, wodurch gleichzeitig ein selbsttätiges Ausrichten der Scheibe in der Rahmenkonstruktion erfolgt und zusätzliche Handgriffe während der Montage nicht notwendig sind.

Da jedoch das profilartige Kupplungselement an der Scheibenunterkante vormontiert werden muß, führt der damit verbundene Dickenaufbau regelmäßig zu einer erschwerten Einführung der Fensterscheibe in den Türschacht. Wegen der notwendigerweise fehlenden Dichtungen in diesem Bereich kommt es deshalb während der Montage immer wieder zu Beschädigungen des Lackes. Ein weiteres Problem können die im Schnappbereich der Kupplungselemente erforderlichen minimalen Toleranzen darstellen, um Umschaltgeräuschen beim Betrieb des Fensterhebers vorzubeugen.

Der voranbeschriebenen Ausführungsform sehr ähnliche Variante offenbart JP 6-135228. Die Profile sind lediglich entgegengesetzt gerichtet angeordnet.

Eine typische kraftschlüssige Klemmverbindung zwischen einer Fensterscheibe und einem Fensterheber zeigt die DE 42 18 425 A1. Danach wird die Fensterscheibe zwischen zwei mit Gummi belegten Klemmbacken eingespannt, wobei die Spannkraft von einer Schraubverbindung oberhalb einer Abstützung zwischen beiden Klemmbacken erzeugt wird.

Bei dieser Verbindungsvariante kann die Scheibe problemlos in den Türschacht eingeführt werden, und zwar auch dann, wenn die Scheibendichtungen bereits im Türschacht montiert sind; die Vorrichtung besteht jedoch aus einer Vielzahl von Teilen.

Aus DE 38 17 260 C2 ist eine im Bereich der Unterkante der Fensterscheibe durch Kleben befestigte Hebeschiene bekannt. Auch ihre Montage ist außerhalb der Tür vorgesehen.

Eine Fensterscheibe für Kraftfahrzeuge mit einer daran befestigten Schiene zur Verbindung mit einem Fensterheber ist ferner aus der gattungsgemäßen EP 0 173 091 A2 bekannt. Danach ist eine Fensterscheibe mit ihrem Rand in den U-förmigen Querschnittsbereich einer metallenen Schiene eingesetzt. In den U-förmigen Querschnittsbereich sind ferner Haltestreifen eingesetzt, die die Fensterscheibe relativ zur Schiene positionieren und in Abstand halten. Um die U-förmige Schiene mit diesen Haltestreifen zu verbinden, weisen die Haltestreifen an ihren beiden Schenkeln jeweils einen nach außen gerichteten Vorsprung auf, der in eine zugeordnete Ausnehmung in dem jeweils benachbarten Schenkel der Schiene eingreift. Der übrige Zwischenraum zwischen der Fensterscheibe und dem U-förmigen Querschnittsbereich der Schiene ist mit einem aushärtenden Kleber ausgefüllt.

Gemäß der technischen Lehre der genannten europäischen Patentanmeldung müssen zunächst die Haltestreifen in die U-förmige Schiene eingebracht werden. Anschließend wird die Fensterscheibe in die U-förmige Schiene eingesetzt und der nicht von den Haltestreifen abgedeckte Zwischenraum zwischen der Fensterscheibe und der U-förmigen Schiene mit Kleber ausgefüllt.

Der Erfindung liegt die Aufgabe zugrunde, eine Vorrichtung zum Verbinden einer Fensterscheibe mit einem Fensterheber zu entwickeln, die sich durch einen konstruktiv einfachen Aufbau und einfache Herstellbarkeit sowie Montagefreundlichkeit auszeichnet. Dabei soll die Fensterscheibe vor ihrer Einführung in den Türschacht keinerlei Zusatzteile tragen. Darüber hinaus soll die Erfindung eine selbsttätige Herstellung der Verbindung sowie Justage zwischen Fensterscheibe und Fensterheber gestatten, ohne daß dazu im Bereich der Verbindungsvorrichtung Montagehandgriffe eines Werkers notwendig sind.

Erfindungsgemäß wird die Aufgabe durch die kennzeichnenden Merkmale des Patentanspruchs 1 gelöst. Die Unteransprüche geben Ausführungsvarianten der Erfindung an.

Die erfindungsgemäße Vorrichtung besteht aus wenigstens einer inneren Kontaktbacke (vorzugsweise einem Paar innerer Kontaktbacken), die an einer Basis schwenkbar lagert und mit äußeren Trägerbacken in Verbindung steht. In der Montageposition wird die Basis von den freien Enden der äußerer Trägerbacken übergriffen, so daß ein in Montagerichtung der Fensterscheibe verschiebbarer formschlüssiger Eingriff besteht. Nach dem Verschieben der Basis, gemeinsam mit den inneren Kontaktbacken in Richtung der Basis der äußeren Trägerbacken, wird bei Erreichen der Funktionsposition die Stellung der inneren Kontaktbacken zu den äußeren Trägerbacken verriegelt.

In Abhängigkeit von der gewählten Verbindungsart, z.B.:
- reiner Formschluß zwischen der Fensterscheibe und einer inneren Kontaktbacke bzw. einem Paar innerer Kontaktbacken,
- kraftschlüssige Klebeverbindung zwischen der Fensterscheibe und einer Klemmbacke bzw. einem Paar innerer Kontaktbacken,
- reibschlüssige Verbindung durch Aufpressen einer an der inneren Kontaktbacke befestigten Reibschicht mit hohem Reibkoeffizient (z.B. Gummi) auf der Scheibenoberfläche oder
- einer beliebigen Kombination der voranstehend genannten Verbindungsarten,
erfolgt die Materialauswahl und die Dimensionierung der Komponenten der erfindungsgemäßen Verbindungsvorrichtung.

Besonders vorteilhaft sind kraftschlüssige Klebeverbindungen, bei denen die Innenseite der Kontaktbacke mit einem Klebemittel, vorzugsweise einem beidseitig haftenden Klebeband, versehen ist. Während des Montagevorganges, bei dem sich die Scheibenunterkante die Kontaktbacke einschließlich ihrer Basis zwischen den äußeren Trägerbacken verschiebt bis die arretierbare Funktionsposition erreicht ist, werden die anfänglich winklig zur Scheibenoberfläche stehenden Kontaktbacken von den freien Enden der äußeren Trägerbacken gegen die Scheibenoberflächen geklappt und von den nach innen gerichteten, an den freien Enden der Trägerbacken vorgesehenen Haken zur Arretierung der Funktionsposition der Kontaktbacken angepreßt. Um jegliches Spiel zwischen den inneren Kontaktbacken und den äußeren Trägerbacken nach dem Erreichen der Funktionsposition auszugleichen, kann zwischen der Basis der inneren und der Basis der äußeren Backen ein elastisches Element vorgesehen sein, das unerwünschte Differenzbewegungen und eventuell daraus resultierende Geräusche sicher vermeidet.

Die nur wenigen Bauteile der erfindungsgemäßen Vorrichtung sind zudem einfach strukturiert und deshalb kostengünstig herstellbar. Sie können beispielsweise als Kunststoffteil extrudiert oder gespritzt bzw. als Al/Mg-Teil strangepreßt werden. Aber auch Blechteile lassen sich in die gewünschte Form bringen.

Neben dem beschriebenen Klebeband sind auch andere Klebemittel anwendbar. Beispielsweise können die Innenflächen der inneren Kontaktbacken ein Klebemittelreservoir (oder eine Vielzahl kleiner Reservoire) tragen, die bei einem hinreichenden Anpreßdruck das Klebemittel freisetzen. Eine andere Möglichkeit besteht in der Verwendung eines beispielsweise thermisch aktivierbaren Klebemittels.

Sollten jedoch die Innenflächen der beschriebenen Kontaktbacken eine Gummibeschichtung oder ähnliches aufweisen, so entsteht eine reibschlüssige Verbindung mit der Fensterscheibe. Um die geforderten Abzugskräfte zu erreichen, muß ein hinreichend großer Anpreßdruck von den äußeren Trägerbacken aufgebracht und auf die inneren Kontaktbacken übertragen werden. Entsprechend hat die Dimentionierung der Trägerbacken zu erfolgen, die schon nach Einführung des Basisteils der inneren Kontaktbacken zwischen die freien Enden der Trägerbacken unter Vorspannung stehen.

Beide voran beschriebenen Verbindungsvarianten können zusätzlich mit einem Formschluß versehen werden, indem beispielsweise wenigstens eine Kontaktbacke einen der Fensterscheibe zugewandten Noppen oder dergleichen trägt, der in ein zugeordnetes Scheibenloch eingreift, wenn die Fensterscheibe die Basis mit der wenigstens einen Kontaktbacke zwischen die Trägerbacken von der Montageposition in die Funktionsposition drückt. Somit wird die Scheibenverbindung auch dann noch sichergestellt, wenn die Tragkraft der Klebeverbindung nachlassen bzw. die Spannkraft der Trägerbacken nach langer Zeit ermüden sollte.

Es sind aber auch formschlüssige Verbindungen herstellbar, bei denen der Formschluß erst durch plastische Verformung von Teilen erfolgt. So kann die Oberfläche der Fensterscheibe in ihrem Befestigungsbereich eine erhabene Struktur, beispielsweise eine quer zur Verschieberichtung verlaufende Riffelung, aufweisen, die sich in das weichere Material der inneren Kontaktbacken eindrückt und dadurch eine formschlüssige Verbindung bildet.

Um die Anzahl der Bauteile der erfindungsgemäßen Verbindungsvorrichtung möglichst gering zu halten, sind sowohl die äußeren Trägerbacken mit ihrer gemeinsamen Basis als auch die innere Kontaktbacke bzw. das Paar innerer Kontaktbacken mit der zugeordneten Basis jeweils einstückig ausgeführt. Die notwendige Beweglichkeit der inneren Kontaktbacken an ihrer Basis wird bei Verwendung von Kunststoff als Werkstoff vorzugsweise durch sogenannte Filmscharniere und bei Verwendung von Metallen durch hinreichend plastisch oder elastisch verformbare Bereiche gewährleistet.

Nachfolgend wird die Erfindung anhand von Ausführungsbeispielen sowie den dargestellten Figuren näher erläutert. Es zeigen:
- Figur 1: eine Vorrichtung zum Verbinden einer Fensterscheibe mit einem Seilfensterheber unter Verwendung einer Klebe-Haftverbindung zwischen einem Paar innerer Kontaktbacken und der Fensterscheibe
a) vor der Montage in Montageposition,
b) während der Montage,
c) nach Abschluß der Montage in verriegelter Funktionsposition mit aus der Basis aufstehender Scheibenkante,
d) nach Abschluß der Montage in verriegelter Funktionsposition mit freiliegender Scheibenkante;
- Figur 2: eine Vorrichtung zum Verbinden einer Fensterscheibe mit einem Armfensterheber unter Verwendung einer Klebe-Hattverbindung zwischen der inneren Kontaktbacke und der Fensterscheibe
a) vor der Montage in Montageposition,
b) während der Montage,
c) nach Abschluß der Montage in verriegelter Funktionsposition,
- Figur 3: eine Vorrichtung zum Verbinden einer Fensterscheibe mit einem Armfensterheber unter Verwendung einer Kombination von Klebe-Haftverbindung und Formschluß zwischen einer inneren Kontaktbacke und der Fensterscheibe bzw. einem Scheibenloch
a) vor der Montage in Montageposition,
b) während der Montage,
c) nach Abschluß der Montage in verriegelter Funktionsposition,
- Figur 4: eine Vorrichtung zum Verbinden einer Fensterscheibe mit einem Seilfensterheber unter Verwendung einer formschlüssigen Verbindung zwischen einem Paar plastisch deformierbarer innerer Kontaktbacken und der Fensterscheibe mit profiliertem Bereich
a) vor der Montage in Montageposition,
b) während der Montage,
c) nach Abschluß der Montage in verriegelter Funktionsposition,
- Figur 5: eine Vorrichtung zum Verbinden einer Fensterscheibe mit einem Fensterheber unter Verwendung einer reibschlüssigen Klemmverbindung zwischen einem Paar innerer Kontaktbacken, die von vorgespannten äußeren Trägerbacken beaufschlagt sind, und der Fensterscheibe
a) separate Trägerbacken aus Blech,
b) Vorrichtung vor der Montage in Montageposition,
c) während der Montage,
d) nach Abschluß der Montage in verriegelter Funktionsposition,
e) mit angesetztem (schematisch dargestellten) Spezialwerkzeug zum Lösen der Verbindung.

Neben der Möglichkeit der wahlweisen Gestaltung des Erfindungsprinzips in Form einer reibschlüssigen Klemmverbindung, einer kraftschlüssigen Klebeverbindung oder einer Formschlußverbindung (oder von Kombinationen der genannten Verbindungen), besteht ein weiterer Vorteil in seiner Anwendbarkeit für Seil- und Armfensterheber. Die vielfältigen Gestaltungsmöglichkeiten erlauben eine optimale Anpassung der Erfindung an die jeweils herrschenden technischen Bedingungen und die gestellten technischen Anforderungen. Somit kann ein hohes Maß an Funktionssicherheit sowie Montage- und Servicefreundlichkeit gewährleistet werden.

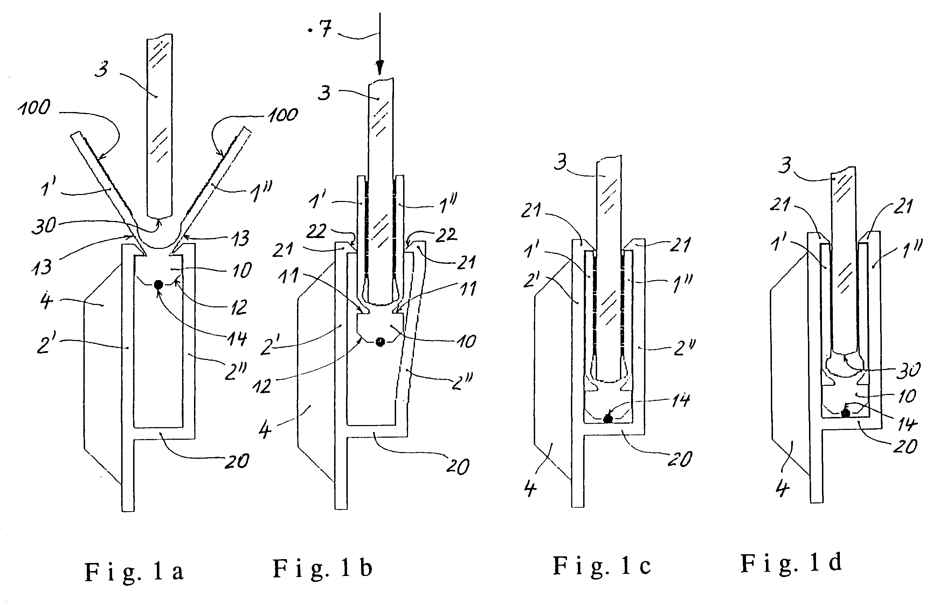

Die in den Figuren 1a bis 1d dargestellte Ausführungsform ist zur Verwendung an einem Seilfensterheber vorgesehen und weist deshalb einen an die Trägerbacke 2' einstückig angeformten (schematisch angedeuteten) Gleiter 4 auf. Er steht mit einer (nicht dargestellten) Führungsschiene in verschiebbarer und formschlüssiger Verbindung. Vorzugsweise sind sämtliche Teile der erfindungsgemäßen Verbindungsvorrichtung aus Kunststoff gefertigt.

Figur 1a zeigt die Vorrichtung unmittelbar vor der Montage; jedoch wurde die Fensterscheibe 3 bereits zwischen den beiden seitlich abgespreizten, winklig zur Ebene der Fensterscheibe 3 angeordneten Kontaktbacken 1',1'' positioniert. Die beiden Kontaktbacken 1',1'' sind über Gelenkbereiche 13 (sogenannte Filmscharniere) mit einer Basis 10 verbunden und tragen auf ihren Innenflächen Klebeelemente 100. Äußere Trägerbacken 2',2'', die über eine Basis 20 miteinander in Verbindung stehen, umgreifen im Bereich ihrer freien Enden die Basis 10 der inneren Kontaktbacken 1',1''. Die dort als Haken 21 ausgebildeten Enden, die in eine von den Anschlagsflächen 11 und dem Gelenkbereich 13 gebildeten Einschnürung eingreifen, fixieren diese Position bis zur Montage.

Zur Vormontage der Verbindungsvorrichtung kann die Basis 10 durch den Spalt zwischen den Haken 21 in Montagerichtung 7 gedrückt werden, wobei die Teile über ihre Einführungsschrägen 12,22 gleiten bis die Montageposition erreicht ist, in der die Haken 21 der Trägerbacken 2',2'' mit den Anschlagsflächen 11 der Basis 10 in Kontakt treten. Es ist aber auch möglich, die Basis 10 durch seitliche Einführung, also quer zur Montagerichtung 7, zwischen den oberen Enden der Trägerbacken 2',2'' zu plazieren.

Wird nun die Fensterscheibe 3 in Montagerichtung 3 verschoben (siehe Figur 1b), so trifft sie auf die Basis 10 und verschiebt diese zusammen mit den angeformten inneren Kontaktbacken 1',1'' in Richtung der Basis 20 der äußeren Trägerbacken 2',2''. Dabei gleiten die Haken 21 auf die Außenflächen der Kontaktbacke 1',1'' auf und klappen diese mit den Klebeelementen 100 gegen die Scheibenoberfläche. Gleichzeitig werden die äußeren Trägerbacken 2',2'' verspannt und drücken die Klebeelemente 100 fest an.

Natürlich kann statt der Fensterscheibe 3 auch die erfindungsgemäße Verbindungsvorrichtung mit dem Fenstenhebersystem gegen die Scheibenkante 30 verfahren werden. Dies hat außerdem den Vorteil, daß mit der Herstellung der Verbindung des Fensterhebers zu einer in der obersten Position (im Rahmen) liegenden Fensterscheibe 3 gleichzeitig eine ideale, stufenlose Justage erfolgt, ohne daß zusätzliche Handgriffe nötig sind.

Der Montagevorgang ist beendet, wenn die innere Basis 10 mit dem Federelement 14 gegen die äußere Basis 20 stößt, wobei gleichzeitig die Haken 21 der äußeren Trägerbacken 2',2'' die freien Enden der inneren Kontaktbacken 1',1'' übergreifen und somit die nun erreichte Position der Teile der Verbindungsvorrichtung zueinander arretieren; die Funktionsposition ist erreicht und die Verbindung zwischen Fensterheber und Fensterscheibe 3 hergestellt.

Bei Verwendung der erfindungsgemäßen Verbindungsvorrichtung für einen Seilfensterheber mit starker Neigungsabweichung zur Scheibenkante 30, wird die Scheibenunterkante 30 während des Montagevorganges auf der einen Seite der Verbindungsvorrichtung stets gegen die innere Basis drücken (siehe Figur 1c), während auf der anderen Seite der Verbindungsvorrichtung zwischen der Scheibenkante 30 und der Basis 10 ein Spalt verbleibt (siehe Figur 1d).

Eine Feder 14 zwischen der inneren Basis 10 und der äußeren Basis 20 sorgt für einen spielfreien Sitz der mit der Fensterscheibe 3 verklebten Kontaktbacken 1',1'' in dem von den äußeren Trägerbacken 2',2'' eingeschlossenen Raum.

Natürlich kann die Feder 14 auch an der Basis 20 vorgesehen sein; insbesondere kann die Feder einstückiger Bestandteil der Basis 10 oder 20 sein.

Man kann die dortigen Platzverhältnisse aber auch derart gestalten, daß eine Verschiebbarkeit der äußeren Trägerbacken und der inneren Kontaktbacken 1',1'' zueinander (quer zur Montagerichtung 7) ermöglicht wird, um bei Anwendung für einen doppelsträngigen Seilfensterheber einen Ausgleich von Toleranzen (verursacht durch nicht exakt parallele Führungsschienen) zu gewährleisten.

Als Klebeelement 100 eignet sich beispielsweise ein beidseitig klebendes Band. Erst unmittelbar vor der Fensterhebermontage wird die Schutzfolie abgezogen. Eine Alternative dazu stellen Klebstoffe dar, die entweder unmittelbar vor dem Montageprozeß auf die Innenseiten der Kontaktbacken 1',1'' aufgetragen werden oder Klebstoffreservoire, die auf den Innenseiten der Kontaktbacken 1',1'' haften und erst durch den Anpreßdruck aus dem Reservoir freigegeben werden.

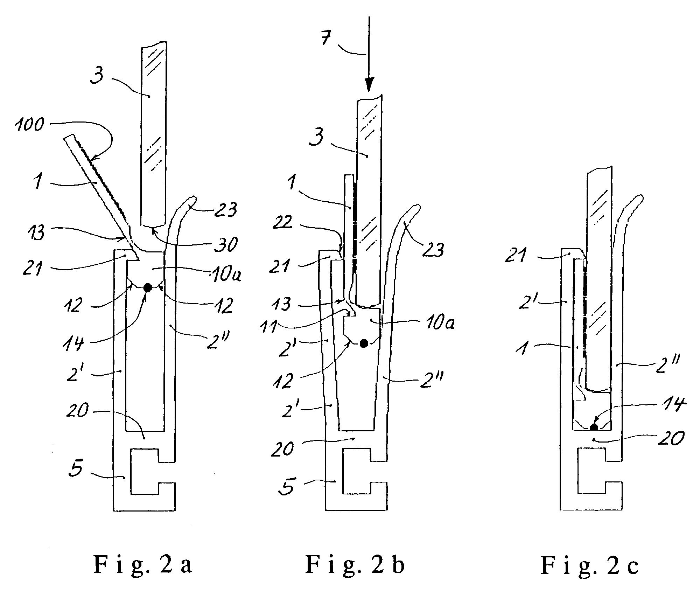

Eine abgewandelte, für einen Armfensterheber vorgesehene Variante der Verbindungsvorrichtung zeigen die Figuren 2a bis 2c. Die zugehörige innere Basis 10a weist nur einen inneren Kontaktbacken 1 mit einem Klebeelement 100 auf. Auch hier steht entsprechend der Montageposition von Figur 2a ein am freien Ende des äußeren Trägerbackens 2' angeformter Haken 21 mit der Anschlagsfläche 11 der Basis 10a im Eingriff. Das freie Ende der anderen Trägerbacke 2'' ist jedoch als ein nach außen gerichteter Fortsatz ausgebildet, der das Einführen der Fensterscheibe 3 in den Spalt zwischen den Backen 1,2' einerseits und der Backe 2'' andererseits erleichtern soll.

Der Montageprozeß (siehe Figur 2b) verläuft bis zum Erreichen der Funktionsposition (siehe Figur 2c) in völliger Analogie zur zuerst beschriebenen Ausführungsform. Wenn das Klebeelement 100 der einen Kontaktbacke 1 in der Lage ist, die geforderten Scheibenabzugskräfte aufzunehmen, dann kann auf eine zweite Kontaktbacke (wie in Figur 1) verzichtet werden.

An die gemeinsame Basis der Trägerbacken 2',2'' schließt sich ein einstückig angeformtes Führungsprofil an, in dem ein mit Hebeln eines Armfensterhebers in Verbindung stehendes Gleitelement oder eine Rolle geführt werden.

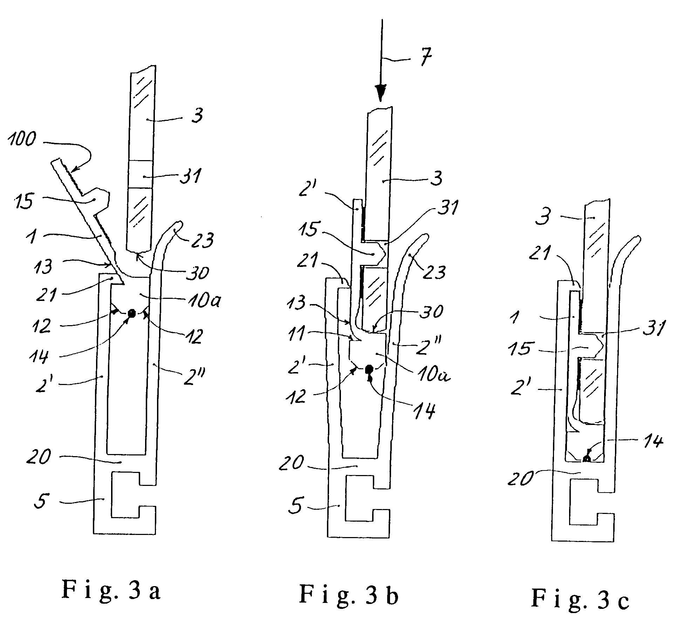

Die in den Figuren 3a bis 3c dargestellte Ausführungsform entspricht im wesentlichen der von Figur 2. Zusätzlich jedoch trägt die Kontaktbacke 1 einen Stift 15, der während des Montageprozeßes, also beim Heranklappen der Kontaktbacke 1 an die Fensterscheibe 3, in ein dafür vorgesehenes Scheibenloch 31 eingreift.

Eine solche Kombination von kraftschlüssiger Klebeverbindung und formschlüssiger Verbindung erhöht die Belastbarkeit der Vorrichtung wesentlich. Der formschlüssige Anteil der Verbindung dient vor allem der Aufnahme von Überlastkräften, wie sie bei Einbruchsversuchen auftreten können. Zur Aufnahme der normalen betriebsbedingten Verstellkräfte ist die Klebeverbindung vorgesehen.

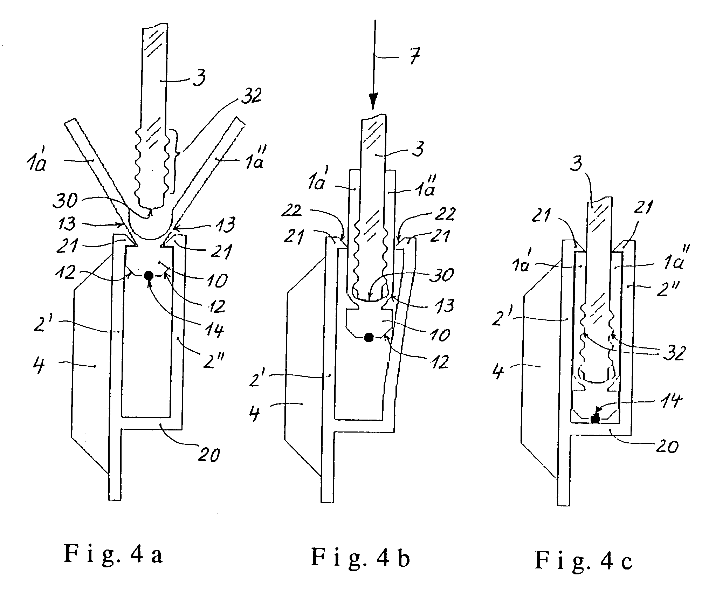

Der konstruktive Aufbau des Ausführungsbeispiels gemäß den Figuren 4a bis 4c entspricht weitestgehend dem von Figur 1. Allerdings kommt hier keine Klebeverbindung sondern eine reine formschlüssige Verbindung zum Einsatz. Dazu weist die Fensterscheibe 3 in der Nähe ihrer Kante 30 beiderseits im Bereich 32 eine Riffelung oder dergleichen auf, die als Modulation im Scheibenkörper selbst oder als separates, mit der Fensterscheibe 3 verbundenes (z.B. aufgeklebtes flaches) Teil vorgesehen sein kann. Während der Montage (siehe Figur 4b) werden die aus Kunststoff bestehenden Kontaktbacken 1a',1a'' von den äußeren Trägerbacken 2',2'' gegen den Bereich 23 der Riffelung gedrückt. Dabei verformen sie sich plastisch und passen sich der Kontur der Fensterscheibe 3 im Bereich 23 an.

Um die dazu notwendigen Verformungskräfte nicht durch die äußeren Trägerbacken 2',2'' aufbringen zu müssen, was eine vergleichsweise materialaufwendige Dimentionierung erfordert, kann auch eine thermische Plastifizierung vorgesehen werden. Beispielsweise kann die benötigte Wärmemenge über Heizdrähte zugeführt werden, die in den Kontaktbacken 1a',1a'' eingebettet sind. Nach dem Wiedererlangen der Formstabilität der Kontaktbacken 1a',1a'' in der Funktionsposition (siehe Figur 4c) steht eine dauerhafte und hochbelastbare Verbindung zur Verfügung. Durch Verwendung sägezahnförmiger Elemente im Bereich 32 der Fensterscheibe 3 kann die Scheibenabzugskraft noch gesteigert werden.

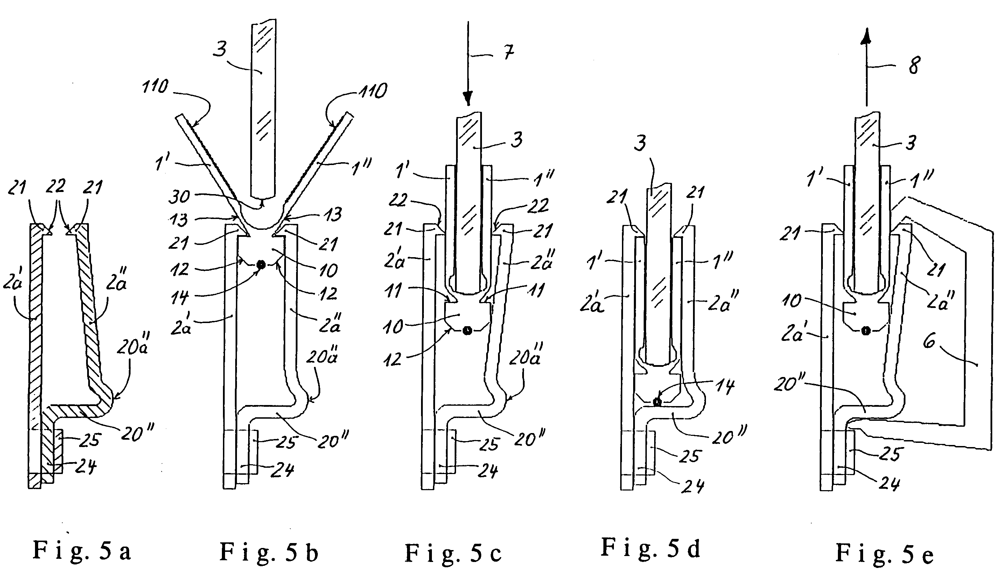

Während alle voranbeschriebenen Erfindungsvarianten von Kunststoffteilen oder von Teilen aus einer stranggepreßten Aluminiumlegierung ausgegangen sind, wählt die Ausführungsform gemäß den Figuren 5a bis 5e Stahlblech als Ausgangsmaterial. Wie aus Figur 5a ersichtlich, werden die separaten Trägerbacken 2a',2a'' durch eine steckverbindung zusammengehalten. In den in Form einer Materialausstellung ausgebildeten Halter 25 der einen Trägerbacke 2a' ist das Einspannende 24 der anderen Trägerbacke 2a'' eingesteckt, woran sich die Basis 20''anschließt, die über den elastischen Deformationsbereich 20a'' mit dem freien Ende der Trägerbacke 2a'' in Verbindung steht.

Da eine ausschließlich auf Reibschluß beruhende Verbindung hergestellt werden soll, müssen die Trägerbacken 2a',2a'' mit ihren Haken 21 nicht nur die inneren Kontaktbaken 1',1'' verriegeln, sie müssen auch die für den Reibschluß notwendige Klemmkraft erzeugen. Deshalb bilden die Klemmbacken 2a',2a'' im nichtbelasteten Zustand (Figur 5a) einen vergleichsweise schmalen Spalt. Durch Einführung der inneren Basis 10 zwischen die freien Enden der Trägerbacken 2a',2a'' erhalten diese ihre Vorspannung (siehe Figur 5b). Auch hier stehen die seitlich gespreizten inneren Kontaktbacken 1',1'' über Gelenkbereiche 13 mit der Basis 10 in Verbindung. Dieses einstückige Bauteil ist vorzugsweise aus Kunststoff gefertigt. Die der Fensterscheibe 3 zugewandten Flächen der Kontaktbacken 1',1'' sind mit Gummi 110 beschichtet.

Während des Montageprozesses (siehe Figur 5c) trifft zunächst die Scheibenkante 30 auf die innere Basis 10 und drückt diese in Richtung der äußeren Basis 20'', wobei sich gleichzeitig die Kontaktbacken 1',1'' an die Oberfläche der Fensterscheibe 3 anlegen. Mit dem Zusammentreffen des Federelements 14 und der Basis 20'' schnappen die Haken 21 über die freien Enden der Kontaktbacken 1',1'' und arretieren so die Lage dieser Bauteile (siehe Figur 5d). Die Abzugskraft, welche diese Verbindung nun aufnehmen kann, ist im wesentlichen bestimmt durch die Anpreßkraft, die die äußeren Trägerbacken 2a',2a'' aufbringen, und durch den Reibungskoeffizienten zwischen der Gummischicht 110 und der Glasoberfläche.

Figur 5e zeigt - schematisch angedeutet - ein Spezialwerkzeug 6 zum Lösen der Verbindung, z.B. zum Zwecke des Austauschs der Fensterscheibe 3. Dazu greift das eine freie Ende des Spezialwerkzeugs 6 an die Einführungsschräge 22 des Hakens 21 an, während sich das andere freie Ende des Werkzeugs 6 zwischen der äußeren Basis 20'' und dem Halter 25 abstützt. Nach Überwindung der Spannkraft des Trägerbackens 2a'' läßt sich die Fensterscheibe 3 (gegebenenfalls mit den inneren Kontaktbacken 1',1'') in die Demontagerichtung 8 herausziehen.

### Bezugszeichenliste

- 1: - Kontaktbacke
- 1': - Kontaktbacke eines Kontaktbackenpaares
- 1'': - Kontaktbacke eines Kontaktbackenpaares
- 1a': - Kontaktbacke eines Kontaktbackenpaares
- 1a'': - Kontaktbacke eines Kontaktbackenpaares
- 10: - Basis der Kontaktbacke
- 10a: - Basis der Kontaktbacke
- 11: - Anschlagsfläche der Basis
- 12: - Einführungsschräge der Basis
- 13: - Gelenkbereich zwische Basis und Kontaktbacke, z.B. Filmscharnier
- 14: - Federelement
- 15: - Stift oder dergleichen
- 100: - Klebeelement (Klebeband) bzw. Klebebereich (mit Klebstoffreseroir)
- 110: - Reibfläche (z.B. Gummiauflage)
- 2': - Trägerbacke
- 2'': - Trägerbacke
- 2a': - Trägerbacke
- 2a'': - Trägerbacke
- 20: - Basis der Trägerbacke
- 20'': - Basis der Trägerbacke
- 20a'': - elastischer Deformationsbereich
- 21: - Haken der Trägerbacke
- 22: - Einführungsschräge des Hakens der Trägerbacke
- 23: - Fortsatz der Trägerbacke
- 24: - Einspannender
- 25: - Halter
- 3: - Fensterscheibe
- 30: - Scheibenkante
- 31: - Scheibenloch
- 32: - profilierter Bereich der Fensterscheibe
- 4: - Gleiter
- 5: - Führungsprofil
- 6: - Spezialwerkzeug
- 7: - Montagerichtung
- 8: - Demontagerichtung

## Patentansprüche

1. Vorrichtung zum Verbinden einer Fensterscheibe (3) mit einem Fensterheber unter Verwendung von mindestens einem Paar Backen, die im Bereich der Scheibenkante (30) mit je einer Seite der Fensterscheibe (3) in form-, kaft- und/oder reibschlüssiger Verbindung stehen und andererseits an der Mechanik des Fensterhebers befestigt sind, bei der die Backen in wenigstens eine innere Kontaktbacke (1,1',1'',1a',1a'') und äußere Trägerbacken (2', 2'', 2a',2a'') geteilt sind und bei der in der Funktionsposition die Stellung der wenigstens einen inneren Kontaktbacke (1,1',1'',1a',1a'') zwischen den Trägerbacken (2', 2'',2a',2a'') verriegelt ist,
**dadurch gekennzeichnet,**
daß die Kontaktbacke (1,1',1'',1a',1a'') an einer Basis (10,10a) schwenkbar lagert, daß die Trägerbacken (2',2'',2a',2a'') mit der inneren Kontaktbacke (1, 1',1'',1a',1a'') vor Beginn der Scheibenmontage über die Basis (10,10a) in einer oberen Montageposition in formschlüssigem, in Montagerichtung (7) der Fensterscheibe (3) verschiebbarem Eingriff stehen, wobei die innere Kontaktbacke (1,1',1'',1a',1a'') winklig zur Ebene der einzuführenden Fensterscheibe (3) abgespreizt ist, und daß die innere Kontaktbacke (1,1',1'', 1a',1a'') durch Verschieben der Fensterscheibe (3) in Montagerichtung (7) gegen die Scheibenoberfläche klappbar ist.

2. Vorrichtung nach Anspruch 1, **dadurch gekennzeichnet,** daß die wenigstens eine innere Kontaktbacke (1, 1', 1'', 1a', 1a'') und die Basis (10,10a) als einstückiges Bauteil ausgeführt sind.

3. Vorrichtung nach Anspruch 2, **dadurch gekennzeichnet,** daß das einstückige Bauteil ein Kunststoffteil mit Filmscharniergelenken (13) zwischen der Basis (10,10a) und der wenigstens einen inneren Kontaktbacke (1,1',1''1a',1a'') ist.

4. Vorrichtung nach Anspruch 2, **dadurch gekennzeichnet,** daß das einstückige Bauteil ein Metallteil ist, dessen Gelenkbereich als Biegebereich ausgebildet ist.

5. Vorrichtung nach Anspruch 1 und 2, **dadurch gekennzeichnet,** daß die Basis (10,10a) entgegen der Montagerichtung (7) weisende Anschlagsflächen (11) aufweist, die in der Montageposition mit nach innen gerichteten Haken (21) der freien Enden der Trägerbacken (2',2'',2a',2a'') im Eingriff stehen.

6. Vorrichtung nach Anspruch 1 und 5, **dadurch gekennzeichnet,** daß die nach innen gerichteten Haken (21) der Trägerbacken (2',2'',2a',2a'') bei Erreichen der Funktionsposition das freie Ende der wenigstens einen inneren Kontaktbacke (1,1',1''1a',1a'') übergreifen und somit diese Position verriegeln.

7. Vorrichtung nach wenigstens einem der voranstehenden Ansprüche, **dadurch gekennzeichnet,** daß die Innenseite der wenigstens einen inneren Kontaktbacke (1, 1', 1'', 1a', 1a'') mit einem Klebemittel versehen sind.

8. Vorrichtung nach Anspruch 7, **dadurch gekennzeichnet,** daß das Klebemittel ein beidseitig haftendes Klebeband ist.

9. Vorrichtung nach Anspruch 7, **dadurch gekennzeichnet,** daß das Klebemittel in einem Reservoir eingeschlossen ist und unter dem Anpreßdruck der Trägerbacken (2', 2'', 2a', 2a'') freigegeben wird.

10. Vorrichtung nach Anspruch 7, **dadurch gekennzeichnet,** daß das Klebemittel durch Erhitzung aktiviert wird.

11. Vorrichtung nach wenigstens einem der Ansprüche 1 bis 5, **dadurch gekennzeichnet,** daß die Innenseite der wenigstens einen inneren Kontaktbacke (1, 1', 1'', 1a', 1a'') mit einer einen hohen Reibwert zur Fensterscheibe (3) aufweisenden Schicht, insbesondere einer Gummischicht, versehen ist, die von den als Federspange ausgebildeten Trägerbacken (2', 2'', 2a', 2a'') auf die Scheibenoberfläche gedrückt wird.

12. Vorrichtung nach wenigstens einem der Ansprüche 1 bis 5, **dadurch gekennzeichnet,** daß die Fensterscheibe (3) wenigstens auf einer Seite in einem Bereich (32), der einer Kontaktbacke (1a',1a'') zugeordnet ist, Profilierungen aufweist und daß die Kontaktbacken (1a',1a'') oder entsprechende Bereiche davon derart plastisch verformbar ausgebildet sind, daß sie sich unter dem Einfluß von Druck und/oder Wärme der äußeren Kontur der Profilierungen im Bereich (32) weitestgehend anpassen.

13. Vorrichtung nach Anspruch 12, **dadurch gekennzeichnet,** daß die Kontaktbacken (1a',1a'') bzw. die den Profilierungen zugeordneten Bereiche der Kontaktbacken (1a', 1a'') während des Montageprozesses mit einer Wärmequelle in Verbindung stehen, so daß eine gezielte Plastifizierung des verwendeten Werkstoffs vorgenommen werden kann.

## Claims

1. Device for linking a window pane (3) to a window lifter using at least one pair of jaws which are each in positive, force-locking and/or friction locking connection in the area of the window pane edge (30) with one side of the window pane (3) and on the other side are fixed to the mechanics of the window lifter wherein the jaws are divided into least one inner contact jaw (1,1',1'', 1a',1a'') and outer support jaws (2',2'',2a',2a'') and wherein in the functioning position the position of the at least one inner contact jaw (1,1',1'',1a',1a'') between the support jaws (2',2'',2a',2a'') is locked characterised in that the contact jaw (1,1',1'',1a',1a'') is swivel mounted on a base (10,10a), that the support jaws (2',2'',2a',2a'') are prior to the start of the pane assembly in an upper assembly position in positive engagement with the inner contact jaw (1,1',1'',1a',1a'') for sliding in the assembly direction (7) of the window pane (3) wherein the inner contact jaw (1,1',1'',1a',1a'') is splayed out at an angle to the plane of the window pane (3) which is to be inserted, and that the inner contact jaw (1,1',1'',1a',1a'') can be folded against the surface of the window pane by sliding the window pane (3) in the assembly direction (7).

2. Device according to claim 1 characterised in that the at least one inner contact jaw (1,1',1'',1a',1a'') and the base (10,10a) are formed as an integral component part.

3. Device according to claim 2 characterised in that the one-piece component part is a plastics part with film hinge joints (13) between the base (10,10a) and the at least one inner contact jaw (1,1',1'',1a',1a'').

4. Device according to claim 2 characterised in that the one-piece component part is a metal part whose articulated area is formed as a bending area.

5. Device according to claims 1 and 2 characterised in that the base (10,10a) has stop faces (11) pointing opposite the assembly direction (7) and in the assembly position engaging with inwardly directed hooks (21) at the free ends of the support jaws (2',2'',2a',2a'').

6. Device according to claims 1 and 5 characterised in that the inwardly directed hooks (21) of the support jaws (2',2'',2a',2a'') on reaching the functioning position engage over the free end of the at least one inner contact jaw (1,1',1'',1a',1a'') and thus lock this position.

7. Device according to at least one of the preceding claims characterised in that the inside of the at least one inner contact jaw (1,1',1'',1a',1a'') is provided with adhesive.

8. Device according to claim 7 characterised in that the adhesive is a double-sided adhesive strip.

9. Device according to claim 7 characterised in that the adhesive is contained in a reservoir and is released under the contact pressure of the support jaws (2',2'',2a',2a'').

10. Device according to claim 7 characterised in that the adhesive is activated through heating.

11. Device according to at least one of claims 1 to 5 characterised in that the inside of the at least one inner contact jaw (1,1',1'',1a',1a'') is provided with a layer, more particularly a rubber layer, having a high friction value in respect of the window pane (3) and which is pressed onto the surface of the pane by the support jaws (2',2'',2a',2a'') formed as a spring clip.

12. Device according to at least one of claims 1 to 5 characterised in that the window pane (3) is provided with profiled areas at least on one side in the area (32) associated with a contact jaw (1a',1a'') and that the contact jaws (1a',1a'') or corresponding areas thereof are formed plastically deformable so that they substantially adapt to the outer contour of the profiled areas in the area (32) under the influence of pressure and/or heat.

13. Device according to claim 12 characterised in that the contact jaws (1a',1a'') or the areas of the contact jaws (1a',1a'') associated with the profiled areas are in contact with a heat source during the assembly process so that a deliberate plastification of the material used can be undertaken.

## Revendications

1. Dispositif pour relier une vitre (3) d'un lève-glace moyennant l'utilisation d'au moins un couple de mâchoires, qui sont reliées, dans la zone du bord (30) de la vitre, à des côtés respectifs de la vitre (3) selon une liaison par formes complémentaires, une liaison de force et/ou une liaison par frottement et d'autre part sont fixés au mécanisme du lève-glace, et dans lequel les mâchoires sont subdivisées en au moins une mâchoire intérieure de contact (1,1',1'',1a',1a'') et en des mâchoires extérieures de support (2',2'',2a',2a'') et dans lequel, dans la position de fonctionnement, la position d'au moins une mâchoire intérieure de contact (1,1',1'',1a',1a'') est verrouillée entre les mâchoires de support (2',2'',2a',2a''),
caractérisé en ce
que la mâchoire de contact (1,1',1'',1a',1a'') est montée de manière à pouvoir pivoter sur une base (10,10a), que les mâchoires de support (2',2'',2a',2a'') sont reliées à la mâchoire de contact intérieure (1,1',1'',1a',1a'') avant le début du montage de la vitre, par l'intermédiaire de la base (10,10a) dans une position de montage supérieure, selon une liaison par formes complémentaires avec possibilité de déplacement dans la direction de montage (7) de la vitre (3), la mâchoire de contact intérieure (1,1',1'',1a', 1a'') étant écartée angulairement par rapport au plan de la vitre (3) devant être introduite, et que la mâchoire de contact intérieure (1,1',1'',1a',1a'') peut être rabattue contre la surface de la vitre (3) sous l'effet du déplacement de cette dernière dans la direction de montage (7).

2. Dispositif selon la revendication 1, caractérisé en ce que la au moins une mâchoire de contact intérieure (1,1',1'',1a',1a'') et la base (10,10a) sont agencées sous la forme d'un composant monobloc.

3. Dispositif selon la revendication 2, caractérisé en ce que le composant monobloc est une pièce en matière plastique comportant des articulations (13) formées d'une charnière constituée d'un film entre la base (10,10a) et la au moins une mâchoire de contact intérieure (1,1',1'',1a',1a'').

4. Dispositif selon la revendication 2, caractérisé en ce que le composant monobloc est une pièce métallique, dont la zone d'articulation est agencée sous la forme d'une zone de pliage.

5. Dispositif selon les revendications 1 et 2, caractérisé en ce que la base (10,10a) possède des surfaces de butée (11) dirigées en sens opposé de la direction de montage (7) et qui engrènent, dans la position de montage, avec des crochets (21), dirigés vers l'intérieur, des extrémités libres des mâchoires de support (2',2'',2a',2a'').

6. Dispositif selon les revendications 1 et 5, caractérisé en ce que les crochets (21), dirigés vers l'intérieur, des mâchoires de support (2,2'',2a',2a'') s'engagent, lorsque la position de fonctionnement est atteinte, par-dessus l'extrémité libre de la au moins une mâchoire de contact intérieure (1,1',1'',1a',1a'') et par conséquent verrouillent cette position.

7. Dispositif selon au moins l'une des revendications précédentes, caractérisé en ce que la face intérieure de la au moins une mâchoire de contact intérieure (1,1',1'',1a',1a'') est pourvue d'un agent adhésif.

8. Dispositif selon la revendication 7, caractérisé en ce que l'agent adhésif est une bande adhésive qui est adhérente sur ses deux faces.

9. Dispositif selon la revendication 7, caractérisé en ce que l'agent adhésif est renfermé dans un réservoir et est libéré sous l'effet de la pression de serrage des mâchoires de support (2',2'',2a',2a'').

10. Dispositif selon la revendication 7, caractérisé en ce que l'agent adhésif est activé par chauffage.

11. Dispositif selon au moins l'une des revendications 1 à 5, caractérisé en ce que la face intérieure de la au moins une mâchoire de contact intérieure (1,1',1'', 1a',1a'') comporte une couche qui possède un coefficient de frottement élevé pour la vitre (3), notamment une couche de caoutchouc, qui est repoussée par les mâchoires de support (2',2'',2a',2a''), agencées sous la forme d'une pince à ressort, contre la surface de la vitre.

12. Dispositif selon au moins l'une des revendications 1 à 5, caractérisé en ce que la vitre (3) possède des configurations profilées au moins sur une face, dans une zone (32) qui est tournée vers une mâchoire de contact (1a',1a''), et que les mâchoires de contact (1a', 1a'') ou des parties correspondantes de ces mâchoires sont agencées de manière à être déformables plastiquement de telle sorte qu'elles s'adaptent dans une très large mesure, sous l'influence d'une pression et/ou d'une chaleur, au contour extérieur des configurations profilées situées dans la zone (32).

13. Dispositif selon la revendication 12, caractérisé en ce que les mâchoires de contact (1a',1a'') ou les parties, qui sont associées aux configurations profilées, des mâchoires de contact (1a',1a'') sont reliées, pendant le processus de montage, à une source de chaleur de sorte qu'on peut réaliser une plastification ciblée du matériau utilisé.
